# FASCICULE DE BREVET EUROPEEN

(11) **EP 3 469 225 B1**
(45) Date de publication et mention de la délivrance du brevet: **09.12.2020**
(21) Numéro de dépôt: 17711712.4
(22) Date de dépôt: 28.02.2017
(51) Int. Cl.: F16D 1/08, F01L 1/02, F16H 57/00

(54) **DISPOSITIF DE DETROMPAGE POUR LE MONTAGE DE PIGNON DE DISTRIBUTION**
FEHLERSICHERUNGSVORRICHTUNG FÜR INSTALLATION EINES GLEICHLAUFGETRIEBES
MISTAKE-PROOFING DEVICE FOR INSTALLATION OF A TIMING GEAR

(30) Priorité: 08.06.2016 FR 1655237
(43) Date de publication de la demande: 17.04.2019
(73) Titulaire: RENAULT s.a.s., 92100 Boulogne-Billancourt (FR)
(72) Inventeur: CANINI, Claudio, 78210 Saint Cyr L'Ecole (FR); TURCANU, Eduard, 78860 Saint Nom La Breteche (FR); RUYER, Jean-Jacques, 95350 Saint Brice Sous Foret (FR)
(86) Numéro de dépôt international: PCT/FR2017/050451
(87) Numéro de publication internationale: WO 2017/212131

(56) Documents cités:
- FR-A1- 2 893 369
- US-A- 5 181 432

## Description

### Domaine technique de l'invention

La présente invention concerne un système de montage de pignons de distribution de moteur à combustion interne de véhicule automobile.

La présente invention concerne plus particulièrement un système de détrompage pour le montage de pignons de distribution.

### Etat de la technique

De manière connue, le moteur thermique de véhicule automobile comporte un vilebrequin actionné en rotation autour d'un axe longitudinal et dont une extrémité porte un pignon de distribution menant pour entrainer un second pignon fixé en bout d'un arbre à cames à l'aide d'un dispositif de transmission comprenant une chaîne de distribution. Le montage du pignon sur le vilebrequin nécessite un calage angulaire du pignon sur le vilebrequin, ce calage peut être effectué à l'aide d'une clavette qui peut être ajoutée lors du montage ou être solidaire du pignon, et qui est sensiblement parallèle à l'axe du pignon et adaptée pour se loger en coulissant dans une rainure complémentaire creusée à l'extrémité du vilebrequin. Ladite clavette permet le calage angulaire simplement. Une fois le pignon monté sur le vilebrequin, elle n'assure plus aucun rôle.

Sur une ligne d'assemblage d'une même famille moteur, on monte différents types de pignons de distribution sur le vilebrequin avec un risque important d'erreur de ne pas monter la bonne définition technique sur le bon moteur, notamment selon l'indice du moteur. On doit gérer pour une même famille de moteurs une diversité de pignons importante en usine qui sont très similaires visuellement. L'écart entre chaque pignon porte uniquement sur le profil de la denture et la dimension de la clavette intégrée ou de la clavette simple.

La publication FR2893369-A1 divulgue un dispositif de montage d'un pignon d'entraînement sur le nez d'un vilebrequin d'un moteur à combustion interne, le pignon comprenant une clavette qui vient se loger dans une rainure de clavette longitudinale creusée à l'extrémité du vilebrequin.

Il est un besoin d'une mise en place d'un moyen physique (ou poka-yoke) pour gérer la diversité pignons tout en conservant les machines-outils qui servent à réaliser la rainure de clavette sur une ligne d'usinage de vilebrequin existante. Ledit moyen physique doit assurer une différenciation mécanique et non plus visuelle entre les couples vilebrequin et pignon de distribution.

Deux pièces de l'attelage mobile sont concernées par ce dispositif de détrompage :
- le vilebrequin, et
- le pignon de distribution.

Il est connu d'associer une dimension de la clavette au couple pignon de distribution et vilebrequin. Cette modification d'une seule dimension de clavette ne permet pas de prendre en compte tous les cas de montage possibles.

Il est également connu d'associer la section transversale de la clavette audit couple pignon et vilebrequin. Cette association entraine toutefois un changement d'outils pour réaliser la rainure dans le vilebrequin dans laquelle va se loger ladite clavette.

Le but de l'invention est de remédier à ces problèmes et un des objets de l'invention est un système de détrompage permettant d'associer physiquement une clavette à un couple formé par un pignon de distribution et un vilebrequin pour la phase de montage des pignons de distribution sur ledit vilebrequin.

### Présentation de l'invention

La présente invention concerne plus particulièrement un système de détrompage de montage de pignon de distribution d'un moteur thermique de véhicule automobile d'une famille de moteurs comportant des moteurs avec des indices moteurs différents, chacun des moteurs comportant :
- un vilebrequin mobile en rotation autour d'un axe de fonctionnement,
- un pignon de distribution monté à une extrémité du vilebrequin,
- une clavette longitudinale permettant le calage angulaire du pignon sur le vilebrequin, fixée parallèlement à l'axe du pignon et adaptée à être logée dans une rainure longitudinale, creusée dans le vilebrequin depuis une extrémité libre jusqu'à un bord d'extrémité longitudinale, ladite clavette étant associée à un doublet formé par un vilebrequin et un pignon de distribution, tel que ladite clavette est de largeur fixe pour chaque indice moteur et comporte une hauteur radiale et une longueur longitudinale qui varient selon les couples pignon de distribution et vilebrequin, la variation de ladite hauteur est en sens inverse de la variation de la longueur de la clavette.

De manière avantageuse, une clavette permet le calage angulaire d'un pignon ave un vilebrequin, les dimensions de ladite clavette dépendent du doublet pignon de distribution et vilebrequin, deux dimensions de ladite clavette sont susceptibles d'être modifiées qui sont la longueur selon l'axe du pignon et la hauteur radiale par rapport audit axe de pignon, la largeur restant fixe. Ladite longueur et la hauteur radiale sont associées à un doublet formé par le pignon de distribution et le vilebrequin, la longueur variant en sens inverse de la variation de la hauteur radiale de la clavette lorsque l'on passe à un autre doublet. Ainsi lesdites deux caractéristiques de la clavette permettent d'éviter sans les erreurs de montage ou d'association de pignon avec le vilebrequin.

Selon d'autres caractéristiques de l'invention :
- la clavette présente une largeur constante et une hauteur variant selon l'indice moteur et ladite clavette comporte une première extrémité longitudinale libre tournée vers le vilebrequin et en appui contre le bord d'extrémité longitudinale de la rainure lorsque la clavette est montée dans la rainure longitudinale.

De manière préférentielle, la clavette présente une largeur identique pour tous les indices moteur ce qui réduit le coût de réalisation de l'invention. La clavette comporte une hauteur variant selon l'indice moteur, ce paramètre permet de différencier rapidement la bonne clavette pour le bon vilebrequin. La clavette comporte une extrémité longitudinale libre tournée vers le vilebrequin et en appui contre le bord d'extrémité longitudinale lorsque la clavette est montée dans ladite rainure, ce qui permet d'obtenir un autre critère pour différencier la bonne clavette pour la bonne rainure. La clavette est une interface représentative du pignon et la rainure est une interface représentative du vilebrequin. Associer la bonne clavette à la bonne rainure revient donc à associer le bon pignon au bon vilebrequin pour un indice moteur.
- la clavette comporte une longueur selon l'axe X qui varie selon l'indice moteur dans le sens inverse de la variation de la hauteur de la clavette.

De manière avantageuse, la clavette comporte une longueur selon l'axe X qui varie selon l'indice du moteur dans le sens inverse de la variation de la hauteur de la clavette, pour bien différencier les doublets formés par la hauteur de la clavette et la longueur de la clavette par indice moteur.
- la clavette est partie du premier pignon menant.

De manière avantageuse, la clavette est partie du pignon ce qui facilite la mise en place de la clavette ainsi que son positionnement. En effet, la clavette comporte une face extérieure coplanaire avec une face radiale extérieure du pignon et donc le positionnement de l'extrémité longitudinale de la clavette qui vient en appui contre le bord d'extrémité longitudinale de la rainure est facilement défini par la longueur de la clavette.

La rainure longitudinale creusée dans le vilebrequin est complémentaire à la clavette. Ladite rainure présente ainsi une largeur fixe ce qui permet de ne pas changer d'outil d'usinage afin de creuser la rainure dans l'axe du vilebrequin, ce qui facilite l'usinage du vilebrequin. On peut ainsi à partir d'un module d'usinage existant, usiner avec un seul et même outil par exemple une fraise, différentes rainures de même largeur mais de profondeur et longueur différentes sur différents vilebrequin différenciés au moins par l'indice du moteur. Elles nous permettront d'obtenir le poka-yoke recherché pour chaque doublet formé par le pignon de distribution et le vilebrequin de références différentes.

### Brève description des figures

D'autres caractéristiques et avantages de l'invention apparaîtront à la lecture de la description qui suit de modes particuliers de réalisation de l'invention donnés à titre d'exemples non limitatifs et représentés sur les dessins annexés, dans lesquels :
- la figure 1 est une vue schématique de coupe longitudinale d'une extrémité de vilebrequin.
- la figure 2 est une vue schématique de coupe longitudinale d'une extrémité de vilebrequin avec trois exemples de doublets formés par un pignon de distribution et un vilebrequin.

### Description détaillée des figures

Dans la description qui va suivre, des chiffres de référence identiques désignent des pièces identiques ou ayant des fonctions similaires.

Les moteurs thermiques de véhicule automobile comporte un vilebrequin monté mobile en rotation autour d'un axe longitudinal X sous l'action de pistons coulissant dans des cylindres creusés dans un carter-cylindres (non représentés) selon un mouvement de va-et-vient, lesdits étant reliés au vilebrequin par des bielles (non représentées). Une culasse est agencée au-dessus dudit carter-cylindres et comportent des conduits d'admission d'air et d'échappement de gaz connectés avec les cylindres et dont les ouvertures vers lesdits cylindres sont commandées par des soupapes. Les soupapes sont actionnées par un arbre à cames monté mobile en rotation autour d'un axe parallèle à l'axe du vilebrequin. L'entrainement en rotation de l'arbre à cames est effectué par la rotation du vilebrequin grâce à un système de transmission comprenant une chaîne entourant un premier pignon menant fixé solidaire de l'extrémité du vilebrequin et un second pignon mené coplanaire avec le premier pignon menant et fixé à l'extrémité de l'arbre à cames.

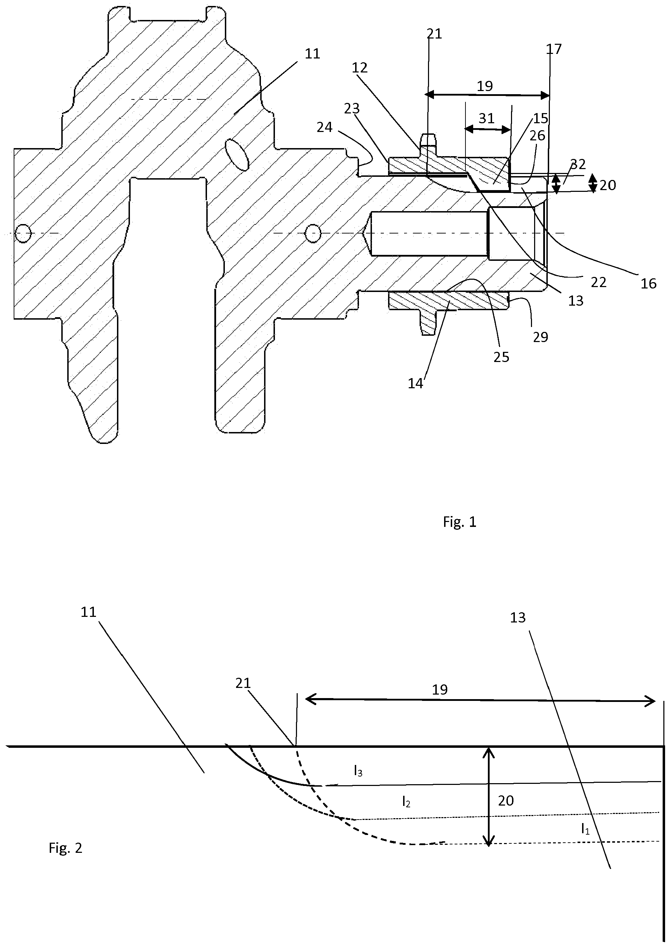

Selon la figure 1 présentant un mode de réalisation préféré, le premier pignon menant 12 comprend une base cylindrique 14 adaptée pour entourer une extrémité 13 libre du vilebrequin 11 débouchant d'une face de distribution du moteur (non représenté), ladite base cylindrique 14 étant montée entourant le vilebrequin. Le pignon menant 12 comporte une extrémité longitudinale 23 en butée contre un épaulement 24 du vilebrequin. La base cylindrique 14 comporte une clavette 15 s'étendant radialement depuis une surface cylindrique intérieure 25 de la base cylindrique 14 en vis-à-vis avec le vilebrequin.

La figure 2 représente une coupe longitudinale de l'extrémité libre 13 du vilebrequin 11 dans laquelle est creusée une rainure longitudinale 16 selon l'invention. Avec le même outil de fraisage, la rainure 16 est creusée selon différentes profondeurs 20, chacune desdites profondeurs 20 correspondant de manière préférentielle à un unique indice de moteur I₁, I₂ I₃, depuis le bord libre 17 du vilebrequin vers le centre du vilebrequin jusqu'à une limite longitudinale. La rainure 16 présente ainsi un bord 21 d'extrémité longitudinale contre lequel la clavette 15 est montée en butée la clavette par un bord d'extrémité 22 longitudinale tournée vers le vilebrequin. La rainure 16 est réalisée de façon préférentielle par fraisage depuis l'extrémité libre 13 du vilebrequin 11.

La longueur 19 de la rainure longitudinale 16 entre ledit bord libre 17 et le bord 21 d'extrémité longitudinale varie de façon opposée à la variation de la profondeur 20 selon des indices moteurs différents, c'est-à-dire un doublet formé par une longueur 19 et une profondeur 20 de la rainure est représentatif d'un indice moteur. Un autre moteur avec un indice moteur différent est associé à un autre doublet avec par exemple une profondeur de rainure 20 inférieure et donc une longueur 19 de rainure supérieure.

Selon la figure 1, la clavette 15 est sensiblement parallélépipédique avec une largeur constante et avec une longueur 31 selon l'axe X du pignon et une hauteur 32, qui varient selon l'indice du moteur. Ladite clavette 15 est logée dans une rainure longitudinale 16. La hauteur de la clavette est alors selon un axe radial orthogonal à l'axe X. On entend par largeur (non représentée) la dimension orthogonale à l'axe X du vilebrequin et à un axe radial dudit vilebrequin selon une corde de cercle délimitant la section circulaire transversale du vilebrequin.

La largeur de ladite clavette 15 et la largeur de la rainure 16 sont ajustées pour permettre le calage angulaire du pignon menant 12 sur le vilebrequin 11. La clavette 15 s'étend radialement depuis la surface cylindrique intérieure 25 de la base cylindrique 14 du pignon en regard avec le vilebrequin 11 et longitudinalement selon l'axe du pignon X.

De manière préférentielle, la clavette 15 comporte une face extérieure 26 coplanaire avec une face radiale extérieure 29 du pignon 12 tournée vers l'extérieur, du côté opposé au moteur.

De manière préférentielle, ladite clavette 15 est partie du premier pignon 12.

Entre la clavette 15 et le fond de la rainure 16 existe un jeu minimum pour le montage de la clavette.

La clavette 15 est engagée dans la rainure longitudinale 16 jusqu'en butée contre le bord d'extrémité longitudinale 21 de la rainure 16.

Pour effectuer le montage, le pignon est engagé autour de l'extrémité libre 13 du vilebrequin 11 avec la clavette 15 engagée dans la rainure 16.

Si la hauteur 32 de la clavette 15 est supérieure à la profondeur 20 de la rainure, le pignon ne peut être assemblé avec le vilebrequin 11.

Si la hauteur 32 de la clavette 15 est inférieure à la profondeur 20 de la rainure 16, le pignon peut dans une première phase être monté autour de l'extrémité libre 13 du vilebrequin avec la clavette 15 engagée dans la rainure 16. Toutefois, si la longueur 31 de la clavette est supérieure à la longueur 19 de la rainure 16, le pignon 12 ne peut être engagé jusqu'en butée contre l'épaulement 24 du vilebrequin. La longueur 31 et la hauteur 32 de la clavette 15 sont donc intimement liées à la longueur 19 et la profondeur 20 de la rainure longitudinale 16 du vilebrequin 11 et lesdites valeurs de longueur et de hauteur/profondeur sont associées à un indice moteur.

De manière préférentielle, la clavette 15 présente un profil longitudinal complémentaire à la rainure 16. Ainsi la longueur 27 et la hauteur 28 de la clavette 15 varient selon l'indice du moteur, la longueur 27 variant en sens opposé à la hauteur 28 et la largeur de la clavette reste constante.

De cette façon, une clavette 15 correspondant à un indice moteur donné ne peut être insérée et logée entièrement que dans une rainure 16 correspondant au même indice du moteur. La clavette 15 est partie du pignon et de ce fait, un pignon pour un indice moteur donné ne peut être monté que sur un vilebrequin pour le même indice moteur.

L'objectif est atteint : avec un même outil d'usinage de l'extrémité du vilebrequin, une clavette de longueur et de hauteur variable selon l'indice du moteur permet d'éviter des erreurs de montage en associant un pignon de distribution avec un vilebrequin, avec un des deux éléments ne correspondant pas à l'indice du moteur.

Comme il va de soi, l'invention ne se limite pas aux seules formes d'exécution de cette prise, décrites ci-dessus à titre d'exemples, elle en embrasse au contraire toutes les variantes.

C'est ainsi notamment que la clavette peut être indépendante du pignon de distribution et elle est partie du vilebrequin; dans ce cas, ledit pignon comporte également une rainure pour accueillir une partie de la clavette.

## Revendications

1. Système (10) de détrompage de montage de pignon de distribution d'un moteur thermique de véhicule automobile d'une famille de moteurs comportant des moteurs avec des indices moteurs différents , chacun des moteurs comportant :
- un vilebrequin (11) mobile en rotation autour d'un axe (X) de fonctionnement,
- un pignon (12) de distribution monté à une extrémité du vilebrequin (11) coaxial avec le vilebrequin,
- une clavette longitudinale (15) permettant le calage angulaire du pignon (12) sur le vilebrequin (11), fixée parallèlement à l'axe (X) du pignon sur une paroi cylindrique intérieure en vis-à-vis avec le vilebrequin et adaptée à être logée dans une rainure (16) longitudinale creusée dans le vilebrequin depuis une extrémité libre (13) jusqu'à un bord (21) d'extrémité longitudinale , ladite clavette (16) étant associée à un doublet formé par le vilebrequin (11) et le pignon (12) de distribution,
tel que ladite rainure est de largeur fixe pour chaque indice moteur et comporte une profondeur radiale (20) et une longueur longitudinale (19) qui varient en fonction de l'indice d'un moteur, la variation de ladite profondeur (20) est en sens inverse de la variation de la longueur (19) de la rainure longitudinale.

2. Système selon la revendication 1, **caractérisé en ce que** la clavette (15) présente une largeur (30) constante et une hauteur (32) variant selon l'indice moteur et **en ce que** ladite clavette (15) comporte une première extrémité longitudinale libre tournée vers le vilebrequin (11) et en appui contre le bord (21) d'extrémité longitudinale de la rainure lorsque la clavette est montée dans la rainure longitudinale.

3. Système selon la revendication 2, **caractérisé en ce que** la clavette (15) comporte une longueur (31) selon l'axe X qui varie selon l'indice moteur dans le sens inverse de la variation de la hauteur (32) de la clavette.

4. Système selon la revendication 2 ou 3, **caractérisé en ce que** la clavette (15) est partie du premier pignon (12) menant.

## Patentansprüche

1. Kodierungssystem (10) für die Montage eines Nockenwellenrads eines Kraftfahrzeugverbrennungsmotors einer Familie von Motoren, die Motoren mit unterschiedlichen Motoroktanzahlen umfasst, wobei die Motoren jeweils Folgendes aufweisen:
- eine um eine Betriebsachse (X) drehbewegliche Kurbelwelle (11),
- ein Nockenwellenrad (12), das an einem Ende der Kurbelwelle (11) koaxial mit der Kurbelwelle montiert ist,
- einen Längskeil (15), der die Winkelverstellung des Nockenwellenrads (12) an der Kurbelwelle (11) gestattet, parallel zu der Achse (X) des Nockenwellenrads an einer zylindrischen Innenwand gegenüber der Kurbelwelle befestigt und zur Aufnahme in einer Längshohlnut (16) in der Kurbelwelle von einem freien Ende (13) bis zu einem Längsenderand (21) ausgeführt ist, wobei der Keil (16) einem aus der Kurbelwelle (11) und dem Nockenwellenrad (12) gebildeten Paar zugeordnet ist,
so dass die Nut für jede Motoroktanzahl eine festgelegte Breite hat und eine radiale Tiefe (20) und eine Länge (19) in Längsrichtung aufweist, die in Abhängigkeit von der Oktanzahl eines Motors variieren, wobei das Variieren der Tiefe (20) umgekehrt zu dem Variieren der Länge (19) der Längsnut ist.

2. System nach Anspruch 1, **dadurch gekennzeichnet, dass** der Keil (15) gemäß der Motoroktanzahl eine konstante Breite (30) und eine variable Höhe (32) aufweist und dass der Keil (15) ein erstes freies Längsende aufweist, das zu der Kurbelwelle (11) hin gewandt ist und an dem Längsenderand (21) der Nut anliegt, wenn der Keil in der Längsnut montiert ist.

3. System nach Anspruch 2, **dadurch gekennzeichnet, dass** der Keil (15) eine Länge (31) gemäß der Achse X aufweist, die gemäß der Motoroktanzahl umgekehrt zu dem Variieren der Höhe (32) des Keils variiert.

4. System nach Anspruch 2 oder 3, **dadurch gekennzeichnet, dass** der Keil (15) Teil des ersten treibenden Nockenwellenrads (12) ist.

## Claims

1. Poka-yoke system (10) for mounting of a timing gear of a motor vehicle combustion engine from a family of engines having engines with different octane numbers, each of the engines having:
- a crankshaft (11) that is rotatable about an operating axis (X),
- a timing gear (12) mounted at one end of the crankshaft (11), coaxially with the crankshaft,
- a longitudinal key (15) for the angular timing setting of the timing gear (12) on the crankshaft (11), said key being fixed parallel to the axis (X) of the timing gear on an interior cylindrical wall facing the crankshaft and designed to be housed in a longitudinal groove (16) recessed in the crankshaft from a free end (13) to a longitudinal end edge (21), said key (16) being associated with a pairing formed by the crankshaft (11) and the timing gear (12),
such that said groove has a fixed width for each octane number and has a radial depth (20) and longitudinal length (19) that vary depending on the octane number of an engine, the variation in said depth (20) is the inverse of the variation in the length (19) of the longitudinal groove.

2. System according to Claim 1, **characterized in that** the key (15) has a constant width (30) and a height (32) that varies depending on the octane number, and **in that** said key (15) has a first, free longitudinal end facing the crankshaft (11) and bearing against the longitudinal end edge (21) of the groove when the key is mounted in the longitudinal groove.

3. System according to Claim 2, **characterized in that** the key (15) has a length (31) along the axis X that varies depending on the octane number inversely to the variation in the height (32) of the key.

4. System according to Claim 2 or 3, **characterized in that** the key (15) is part of the first drive gear (12).
